(19) Europäisches Patentamt / European Patent Office / Office européen des brevets

(11) **EP 4 279 623 A1**

(12) **EUROPEAN PATENT APPLICATION**
published in accordance with Art. 153(4) EPC

(43) Date of publication:
**22.11.2023 Bulletin 2023/47**

(21) Application number: **21919620.1**

(22) Date of filing: **08.12.2021**

(51) International Patent Classification (IPC):
*C22C 38/00* (2006.01)     *C22C 38/50* (2006.01)
*C22C 38/54* (2006.01)     *C23G 1/08* (2006.01)
*H01M 8/021* (2016.01)     *H01M 8/12* (2016.01)

(52) Cooperative Patent Classification (CPC):
**C22C 38/00; C22C 38/50; C22C 38/54; C23G 1/08;
H01M 8/021; H01M 8/12; Y02E 60/50**

(86) International application number:
**PCT/JP2021/045168**

(87) International publication number:
**WO 2022/153731 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021  JP 2021004148**

(71) Applicant: **NIPPON STEEL Stainless Steel
Corporation
Tokyo 100-0005 (JP)**

(72) Inventors:
• **HATANO,Masaharu**
  **Tokyo 100-0005 (JP)**
• **MATSUMOTO,Mitsuki**
  **Tokyo 100-0005 (JP)**
• **TAI,Yoshikazu**
  **Tokyo 100-0005 (JP)**
• **KAGEOKA,Kazuyuki**
  **Tokyo 100-0005 (JP)**

(74) Representative: **Vossius & Partner
Patentanwälte Rechtsanwälte mbB
Siebertstraße 3
81675 München (DE)**

(54) **STAINLESS STEEL MATERIAL FOR SOLID OXIDE FUEL CELLS, METHOD FOR PRODUCING SAME, MEMBER FOR SOLID OXIDE FUEL CELLS, AND SOLID OXIDE FUEL CELL**

(57)     A stainless steel material for solid oxide fuel cells, the stainless steel material containing: on a mass basis, 0.030% or less of C; 1.00% or less of Si; 1.00% or less of Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti; 1.00% or less of Ni; and 1.00% or less of Cu, a high purity index represented by the following equation (1) being less than 1.50%, and the balance being Fe and impurities:

$$\text{high purity index} = 10(C + N) + 15S + 8P + 2(Ti + Nb) \quad (1)$$

wherein each of the symbols of the elements represents a content of each of the elements.

**Description**

FIELD OF THE INVENTION

The present invention relates to a stainless steel material for solid oxide fuel cells, a method for producing the same, a member for solid oxide fuel cells, and a solid oxide fuel cell.

BACKGROUND OF THE INVENTION

A conventional solid oxide fuel cell (SOFC) was of a high temperature type having an operating temperature of more than 600°C. However, in recent years, low-temperature operating SOFCs have been proposed to operate in a temperature range of 600°C or less (e.g., Patent Literatures 1 and 2). For reasons of costs, corrosion resistance and the like, stainless steel materials are generally used for the members of such solid oxide fuel cells.

The solid oxide fuel cells have been developed mainly as stationary power sources. Recently, however, it is expected that applications will be expanded to various moving bodies such as commercial and industrial vehicles, cars and aircraft.

PRIOR ART

Patent Literatures

[Patent Literature 1] Japanese Patent Application Publication No. 2020-53388 A
[Patent Literature 2] Japanese Patent No. 6696992 B

SUMMARY OF THE INVENTION

Problem to be Solved by the Invention

A member (such as a separator, an interconnector, a current collector, and the like) forming a solid oxide fuel cell requires electrical conductivity. However, since the electrical conductivity of the member decreases as the operating temperature decreases, the electrical conductivity of the member used in conventional solid oxide fuel cells of the high-temperature operating type may not be sufficient.

In addition, when the application is expanded to the moving bodies, starting and stopping often occur as compared to the stationary type, so that high thermal shock resistance is required for the moving bodies. However, it cannot be said that the members used in conventional stationary solid oxide fuel cells have sufficient thermal shock resistance.

The present invention has been made in order to solve the problems as described above. An object of the present invention is to provide a stainless steel material for solid oxide fuel cells, which has excellent conductivity at a temperature of 600°C or less and excellent thermal shock resistance, and a method for producing the same. Also, another object of the present invention is to provide a member for solid oxide fuel cells and a solid oxide fuel cell, which comprise the stainless steel material for solid oxide fuel cells having such properties.

Means for Solving the Problem

As a result of extensive studies for stainless steel materials, the present inventors have found that the above problems can be solved by controlling the composition to a specific composition, and have completed the present invention.

Thus, the present invention relates to a stainless steel material for solid oxide fuel cells, the stainless steel material comprising: on a mass basis, 0.030% or less of C; 1.00% or less of Si; 1.00% or less of Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti; 1.00% or less of Ni; and 1.00% or less of Cu, a high purity index represented by the following equation (1) being less than 1.50%, and the balance being Fe and impurities:

$$\text{high purity index} = 10(C + N) + 15S + 8P + 2(Ti + Nb) \qquad (1)$$

wherein each of the symbols of the elements represents a content of each of the elements.

Also, the present invention relates to a method for producing a stainless steel material for solid oxide fuel cells, the method comprising subjecting a slab to hot rolling, followed by cold rolling, the slab comprising: on a mass basis, 0.030% or less of C; 1.00% or less of Si; 1.00% or less or Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti; 1.00% or less of Ni; and 1.00% or less of Cu, a high purity index represented by the following equation (1) being less than 1.50%, and the balance being Fe and impurities:

$$\text{high purity index} = 10(C + N) + 15S + 8P + 2(Ti + Nb) \qquad (1)$$

wherein each of the symbols of the elements represents a content of each of the elements.

Moreover, the present invention relates to a member for solid oxide fuel cells, the member comprising the stainless steel material for solid oxide fuel cells.

Further, the present invention relates to a solid oxide fuel cell comprising the member for solid oxide fuel cells.

Effects of Invention

According to the present invention, it is possible to provide a stainless steel material for solid oxide fuel cells, which has excellent conductivity at a temperature of 600°C or less and excellent thermal shock resistance, and a method for producing the same. According to the present invention, it is also possible to provide a member for solid oxide fuel cells and a solid oxide fuel cell, which comprise the stainless steel material for solid oxide fuel cells having such properties.

BRIEF DESCRIPTION OF THE DRAWINGS

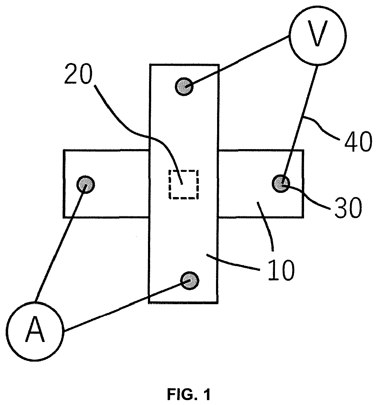

FIG. 1 is a schematic top view of a sample for measuring electrical conductivity.

DETAILED DESCRIPTION OF THE INVENTION

Hereinafter, embodiments of the present invention will be specifically described. It is to understand that the present invention is not limited to the following embodiments, and those which have appropriately added changes, improvements and the like to the following embodiments based on knowledge of a person skilled in the art without departing from the spirit of the present invention fall within the scope of the present invention.

It should be noted that, as used herein, the expression "%" in relation to any component means "% by mass", unless otherwise specified.

The stainless steel material for solid oxide fuel cells according to an embodiment of the present invention (hereinafter, abbreviated as "stainless steel material") contains: 0.030% or less of C; 1.00% or less of Si; 1.00% or less or Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti: 1.00% or less of Ni; and 1.00% or less of Cu, a high purity index represented by the following equation (1) being less than 1.50%, and the balance being Fe and impurities.

As used herein, the term "impurities" refers to components contaminated due to various factors of raw materials such as ores and scraps, and the production steps, during the industrial production of stainless steel materials, which are permissible within a range that does not adversely affect the present invention. Further, the term "stainless steel material" is a concept including various shapes such as stainless steel strips, stainless steel sheets and stainless steel foils.

Also, the stainless steel material according to an embodiment of the present invention may optionally contain one or more selected from: 0.0050% or less of B; 0.5% or less of Sn; 0.5% or less of V; 0.5% or less of W; 0.010% or less of Ca; 0.010% or less of Mg; 0.50% or less of Zr; 0.5% or less of Co; 0.01% or less of Ga; 0.10% or less of Hf, and 0.10% or less of REM.

< 0.030% or less of C>

C is an element that affects the electrical conductivity of the stainless steel material at a temperature of 600°C or less. An excessively high C content will decrease the electrical conductivity. Therefore, the C content should be 0.030% or less, and preferably 0.020% or less, and more preferably 0.015% or less. On the other hand, the lower limit of the C content is not particularly limited, but as the C content is lower, the refining process will take a longer period of time, which may increase the production cost. Therefore, the C content is preferably 0.0002% or more, and more preferably 0.0005% or more.

<1.00% or less of Si>

Si is an element that is effective to increase the heat resistance of the stainless steel material and form a Cr oxide film at a temperature of 600°C or less. However, if the Si content is too high, a continuous oxide of $SiO_2$ may be formed at an interface of the stainless steel material to decrease the electrical conductivity and decrease the toughness due to hardening. Therefore, the Si content should be 1.00% or less, and preferably 0.80% or less, and more preferably 0.60% or less, and even more preferably 0.30% or less. On the other hand, the lower limit of the Si content is not particularly limited. The Si content is preferably 0.05% or more, and more preferably 0.08% or more, from the viewpoint of obtaining the above effects of Si.

<1.00% or less of Mn>

Mn is an element that is effective to improve the conductivity of the oxide film by producing a $(Mn, Cr)_3O_4$-type oxide as well as to improve the toughness of the stainless steel material. However, an excessively high Mn content may reduce the heat resistance and workability. Therefore, the Mn content should be 1.00% or less, and preferably 0.50% or less. On the other hand, the lower limit of the Mn content is not particularly limited. The Mn content is preferably 0.05% or more, and more preferably 0.08% or more, from the viewpoint of obtaining the above effects of Mn.

<0.050% or less of P>

P is an element that may reduce the toughness of the stainless steel material. Therefore, the P content should be 0.050% or less, and preferably 0.040% or less. On the other hand, the lower limit of the P content is not particularly limited, but as the P content is lower, the refining process will take a longer period of time, which may increase the production cost. Therefore, the P content is preferably 0.001% or more, and more preferably 0.010% or more.

<0.0030% or less of S>

S is an element that forms sulfide-based inclusions and may reduce a power generation efficiency of the SOFC due to evaporation into and poisoning of the electrodes. Therefore, the S content should be 0.0030% or less, and preferably 0.0015% or less. On the other hand, the lower limit of the S content is not particularly limited, but as the S content is lower, the refining process will take a longer period of time, which may increase the production cost. Therefore, the S content is preferably 0.0001% or more, and more preferably 0.0002% or more.

<13.0% or more and less than 22.0% of Cr>

Cr is a main element for forming a passive film on the surface of the stainless steel material, and is able to improve properties such as corrosion resistance and heat resistance by the passive film. The Cr content should be 13.0% or more, and preferably 13.5% or more, from the viewpoint of forming the Cr oxide film having improved electrical conductivity at a temperature of 600°C or less. On the other hand, if the Cr content is too high, the toughness and thermal shock resistance are deteriorated. Therefore, the Cr content is less than 22.0% or less, and preferably 21.0% or less.

<2.50% or less of Mo>

Mo is a major element for strengthening the passive film on the stainless steel material, and is able to improve properties such as corrosion resistance and heat resistance by the passive film. Mo is also an element for providing effects of promoting the formation of the Cr oxide film on the stainless steel material at a temperature of 600°C or less to improve electrical conductivity. Typically, although Cr oxides produced at 600°C or less contain Fe and thus have lower electrical conductivity, the presence of Mo in the Cr oxides can improve electrical conductivity. However, if the Mo content is too high, there is a risk that the toughness and the thermal shock resistance will be deteriorated due to hardening. Therefore, the Mo content should be 1.50% or less, and preferably 1.30% or less, and more preferably 1.00% or less. On the other hand, the lower limit of the Mo content is not particularly limited. The Mo content is preferably 0.05% or more, and more preferably 0.30% or more, from the viewpoint of obtaining the above effects of Mo.

<0.030% or less of N>

N is an element that may be bonded to Al to form AlN, which will be a starting point of abnormal oxidation, and may reduce the toughness of the stainless steel material. Therefore, the N content should be 0.030% or less, and preferably 0.025% or less. On the other hand, the lower limit of the N content is not particularly limited, but as the N content is lower, the refining process will take a longer period of time, which may increase the production cost. Therefore, the N content is preferably 0.001% or more, and more preferably 0.010% or more.

<0.30% or less of Al>

Al is an element that is effective to promote the formation of the Cr oxide film on the stainless steel material at a temperatures of 600°C or less to improve electrical conductivity. However, if the Al content is too high, AlN which will be a starting point of abnormal oxidation may tend to be generated, and the toughness and the thermal shock resistance of the stainless steel material may be deteriorated. Therefore, the Al content should be 0.30% or less, and preferably 0.25% or less. On the other hand, the lower limit of Al content is not particularly limited. The Al content is preferably 0.01% or more, and more preferably 0.03% or more, from the viewpoint of obtaining the above effects of Al.

<0.40% or less of Nb>

As with T, Nb is preferentially bonded to C and N to form Nb carbonitrides, and so it is an element effective to provide the stainless steel material with high purity. Therefore, Nb promotes the formation of the Cr oxide film at a temperature of 600°C or less and contributes to the improvement of the electrical conductivity. Nb is also an element that suppresses deterioration of corrosion resistance due to the formation of Cr carbonitrides. However, if the Nb content is too high, an amount of solutionized Nb that has not been consumed to the production of Nb carbonitrides increases. As a result, the toughness and the thermal shock resistance may be deteriorated due to hardening. Therefore, the Nb content should be 0.40% or less, and preferably 0.35% or less. On the other hand, the lower limit of the Nb content is not particularly limited. The Nb content is preferably 0.01% or more, and more preferably 0.05% or more, from the viewpoint of obtaining the above effects of Nb.

<0.40% or less of Ti>

As with Nb Ti is preferentially bonded to C and N to form Ti carbonitrides, and so it is an element to provide the stainless steel material with high purity. Therefore, Ti promotes the formation of the Cr oxide film at a temperature of 600°C or less and contributes to the improvement of the electrical conductivity. Ti is also an element that suppresses deterioration of corrosion resistance due to the formation of Cr carbonitrides. However, an excessively high Ti content results in coarse Ti carbonitrides, which will become the starting points, thereby reducing the toughness and the thermal shock resistance. Therefore, the Ti content should be 0.40% or less, and preferably 0.35% or less. On the other hand, the lower limit of Ti content is not particularly limited. The Ti content is preferably 0.01% or more, and more preferably 0.05% or more, from the viewpoint of obtaining the above effects of Ti.

<1.00% or less of Ni>

Ni is an element that improves the corrosion resistance of the stainless steel material and suppresses the deterioration of the toughness. However, since Ni is an austenite phase stabilizing element, an excessive high Ni content increases the thermal expansion coefficient to deteriorate the thermal shock resistance. Therefore, the Ni content should be 1.00% or less, and preferably 0.80% or less. On the other hand, the lower limit of the Ni content is not particularly limited. The Ni content is preferably 0.01% or more, and more preferably 0.05% or more, from the viewpoint of obtaining the above effects of Ni.

<1.00% or less of Cu>

Cu is an element that improves the corrosion resistance and electrical conductivity of the stainless steel material. However, since Cu is an austenite phase stabilizing element, an excessive high Cu content increases the thermal expansion coefficient to deteriorate the thermal shock resistance. Therefore, the Cu content should be 1.00% or less, and preferably 0.80% or less. On the other hand, the lower limit of the Cu content is not particularly limited. The Cu content is preferably 0.01% or more, and more preferably 0.03% or more, from the viewpoint of obtaining the above effects of Cu.

<high purity index being less than 1.50%>

The high purity index is represented by the following equation (1):

$$\text{High purity index} = 10(C + N) + 15S + 8P + 2(Ti + Nb) \qquad (1)$$

In the equation, each of the symbols of the elements represents a content of each of the elements.

If the high purity index is too high, an amount of Cr in the surface layer on the stainless steel material will be consumed by the formation of carbonitrides and the like, so that the formation of the Cr oxide film at the temperature of 600°C or less will be impaired. Consequently, as the electrical conductivity decreases, the carbonitrides serves as stating points to easily generate cracks in the surface layer, resulting in a decrease in thermal shock resistance. Therefore, the high purity index is less than 1.50%, and preferably 1.30% or less, and more preferably less than 1.00%. On the other hand, the lower limit of the high purity index is not particularly limited. The high purity index is preferably 0.30% or more, and more preferably 0.40% or more, in order to suppress an excessive refining load and an increase in raw material costs.

<0.0050% or less of B>

B is an element that is effective to increase grain boundary strength to improve secondary workability by preferential enrichment at grain boundaries, and the element is optionally contained in the stainless steel material. However, an excessively high B content results in coarsened borides ($Cr_2B$) at the grain boundaries, thereby reducing the thermal shock resistance. Therefore, the B content should be 0.0050% or less, and preferably 0.0030% or less. On the other hand, the lower limit of the B content is not particularly limited. The B content is preferably 0.0002% or more, and more preferably 0.0005% or more, from the viewpoint of obtaining the above effects of B.

<0.5% or less of Sn>

Sn is an element that is effective to improve the corrosion resistance and the electrical conductivity of the stainless steel material, and the element is optionally contained in the stainless steel material. However, an excessive Sn content deteriorates the hot workability and the toughness. Therefore, the Sn content should be 0.5% or less, and preferably 0.3% or less. On the other hand, the lower limit of the Sn content is not particularly limited. The Sn content is preferably 0.01% or more, and more preferably 0.05% or more, from the viewpoint of obtaining the above effects of Sn.

<0.5% or less of V>

V is an element that improves the strength of the stainless steel material without impairing its toughness, and the element is optionally contained in the stainless steel material. However, an excessively high V content may deteriorate the workability and toughness, and increases the cost. Therefore, the V content should be 0.5% or less, and preferably 0.4% or less. On the other hand, the lower limit of V content is not particularly limited. The V content is preferably 0.01% or more, and more preferably 0.05% or more, from the viewpoint of obtaining the above effects of V.

<0.5% or less of W>

W is an element that improves the strength of the stainless steel material without impairing the toughness, and the element is optionally contained in the stainless steel material. However, an excessively high W content may deteriorate the workability and toughness, and also increases the cost. Therefore, the W content should be 0.5% or less, and preferably 0.4% or less. On the other hand, the lower limit of W content is not particularly limited. The W content is preferably 0.01% or more, and more preferably 0.05% or more, from the viewpoint of obtaining the above effects of W.

<0.010% or less of Ca>

Ca is an element that fixes S to provide the stainless steel material with high purity, and the element is optionally contained in the stainless steel material. However, an excessively high Ca content will increase the amount of inclusions generated to deteriorate the electrical conductivity and the thermal shock resistance. Therefore, the Ca content should be 0.010% or less, and preferably 0.005% or less. On the other hand, the lower limit of Ca content is not particularly limited. The Ca content is preferably 0.0005% or more, and more preferably 0.0010% or more, from the viewpoint of obtaining the above effects of Ca.

<0.010% or less of Mg>

Mg is an element that is effective to refine the stainless steel material, and the element is optionally contained in the stainless steel material. However, an excessively high Mg content increases the amount of inclusions generated to deteriorate the electrical conductivity and the thermal shock resistance. Therefore, the Mg content should be 0.010% or less, and preferably 0.005% or less. On the other hand, the lower limit of Mg content is not particularly limited. The Mg content is preferably 0.0001% or more, and more preferably 0.0005% or more, from the viewpoint of obtaining the above effects of Mg.

<0.50% or less of Zr>

Zr is an element that fixes C to the stainless steel material with high purity, and the element is optionally contained in the stainless steel material. However, an excessively high Zr content will deteriorate the workability of the stainless steel material. Therefore, the Zr content should be 0.50% or less, and preferably 0.40% or less. On the other hand, the lower limit of Zr content is not particularly limited. The Zr content is preferably 0.001% or more, and more preferably 0.005% or more, from the viewpoint of obtaining the above effects of Zr.

<0.5% or less of Co>

Co is an element that improves the strength of the stainless steel material without impairing the toughness, and the element is optionally contained in the stainless steel material. However, an excessively high Co content may deteriorate the workability and the toughness, and also increases the cost. Therefore, the Co content should be 0.5% or less, and preferably 0.4% or less. On the other hand, the lower limit of Co content is not particularly limited. The Co content is preferably 0.01 % or more, and more preferably 0.05% or more, from the viewpoint of obtaining the above effects of Co.

<0.01% or less of Ga>

Ga is an element that improves the hot workability of the stainless steel material, and the element is optionally contained in the stainless steel material. However, an excessively high Ga content will deteriorate the producibility. Therefore, the Ga content should be 0.01% or less, and preferably 0.005% or less. On the other hand, the lower limit of Ga content is not particularly limited. The Ga content is preferably 0.0001% or more, and more preferably 0.0005% or more, from the viewpoint of obtaining the above effects of Ga.

<0.10% or less of Hf>

Hf is an element that fixes C to provide the stainless steel material with high purity, and the element is optionally contained in the stainless steel material. However, an excessively high Hf content will deteriorate the workability of the stainless steel material. Therefore, the Hf content should be 0.10% or less, and preferably 0.08% or less. On the other hand, the lower limit of the Hf content is not particularly limited. The Hf content is preferably 0.001%, and more preferably 0.005%, from the viewpoint of obtaining the above effects of Hf.

<0.10% or less of REM>

REM (rare earth element) preferentially bonds to S and P to form a compound, so that it is possible to suppress the reduction of the electrical conductivity and the thermal shock resistance due to S and P. The REM is optionally contained in the stainless steel material. However, an excessively high REM content may result in hardening of the stainless steel material, so that the toughness and workability may be deteriorated. Therefore, the REM content should be 0.10% or less, and preferably 0.08% or less. On the other hand, the lower limit of the REM content is not particularly limited. The REM content is preferably 0.001% or more, and more preferably 0.005% or more, from the viewpoint of obtaining the above effects of REM.

The REM refers to a generic term for two elements, scandium (Sc) and yttrium (Y), and fifteen elements (lanthanides) from lanthanum (La) to lutetium (Lu). These may be used alone or as a mixture. Among the REM, La and Y are preferred.

In the stainless steel material according to an embodiment of the present invention, a crystal orientation ratio ($\{200\}$ / [$\{110\}$ + $\{211\}$]) of a crystal orientation $\{200\}$ to the sum of crystal orientations $\{110\}$ and $\{211\}$ is preferably less than 0.30, and more preferably less than or equal to 0.25, at a depth position of 10 $\mu$m from the surface. Although the lower limit of the crystal orientation ratio is not particularly limited, it may preferably be 0.05 or more, aned more preferably 0.10 or more.

A decrease in the thermal shock resistance of the stainless steel material is caused by the fact that cracks tend to be generated in the surface layer due to a difference between the texture of the surface layer of the stainless steel material and the texture of the matrix phase of the stainless steel material. In particular, if the number of the crystal orientation {200} having lower plastic deformability is larger in the surface layer of the stainless steel material, the cracks tend to be generated. Therefore, by controlling the crystal orientation ratio ({200} / [{110} + {211}]) to less than 0.30, the ratio of the crystal orientation {200} that is the starting point of cracks is reduced, so that the generation of the cracks can be suppressed to improve the thermal shock resistance.

Also, the electrical conductivity of the stainless steel material at the temperature of 600°C or less depends on a decrease in Cr concentration in the Cr oxide film ($(Cr, Fe)_2O_3$) formed on the surface layer of the stainless steel material. However, by controlling the crystal orientation ratio ({200} / [{110}+{211}]) to less than 0.30, the orientation property between the surface layer and the Cr oxide film can be improved to increase the Cr concentration of ($(Cr, Fe)_2O_3$) in the surface layer, so that the conductivity at the temperatures of 600°C or less can be improved.

Here, in the specification, the crystal orientation is determined by X-ray diffraction of the surface of the stainless steel material. More particularly, the stainless steel material is cut, and the crystal orientation is measured on the surface using an X-ray diffractometer (RINT 2500 from Rigaku Corporation). For example, a CuKα characteristic X-ray (wavelength ($\lambda$) = 1.5444 Å) emitted from a copper tube is used for the diffraction. In this case, the {110} is detected at 44.79°, the {200} is detected at 65.20° and the {211} is detected at 82.58° in the 2θ method. Therefore, an X-ray intensity ratio of these crystal planes is calculated.

In the stainless steel material according to the embodiment of the present invention, a ratio of a crystal orientation {111} $\pm$ 15° is preferably more than 60%, and more preferably 65% to 99%, at a position at a center in a thickness direction (a position of t/2 in which t is a thickness of the stainless steel material). In addition, the upper limit of the ratio is preferably 98%, and more preferably 95%.

By controlling the crystal orientation at the central position in the thickness direction as described above, the cracks will be difficult to be generated in the surface layer, so that the thermal shock resistance can be improved. Further, by controlling the crystal orientation as described above, it will be easier to increase the Cr content in the oxide film on the surface layer, so that the thermal shock resistance and the electrical conductivity at the temperature of 600°C or less can be improved.

Here, in this specification, the ratio of the crystal orientation {111} $\pm$ 15° can be measured by an EBSP orientation analysis system capable of visualizing the crystal orientation for each crystal grain. More particularly, the stainless steel material is cut, polished (thickness-reduced) from the surface to t/2, and the surface is polished with colloidal silica to remove processing strain, and EBSP orientation analysis is performed. For example, it is preferable to capture a region having a wide of 1 mm and a length of 2 mm for the orientation analysis. The ratio of the {111} $\pm$ 15°can be determined by dividing a crystal orientation map display of the EBSP orientation analysis system into regions of {111} $\pm$ 15° and other orientations.

Although the shape of the stainless steel material according to the embodiment of the present invention is not particularly limited, it is preferably a sheet shape or a foil shape. When the stainless steel material has the sheet shape or the foil shape, its thickness is, for example, 0.1 to 5.0 mm, and preferably 0.1 to 3.0 mm, and more preferably 0.1 to 1.0 mm, and even more preferably 0.1 to 0.5 mm.

The stainless steel material according to the embodiment of the present invention can be produced according to a known method with the exception that the slab having the above composition is used.

Here, an example of typical methods for producing the stainless steel material according to an embodiment of the present invention will be described. In addition, the method for producing the stainless steel material according to the embodiment of the present invention is not limited to the following production method.

The stainless steel material according to the embodiment of the present invention can be produced by subjecting the slab having the above composition to hot rolling, followed by cold rolling. The conditions for the hot rolling and cold rolling are not particularly limited, and they may be appropriately adjusted according to the composition.

The cold rolling followed by the hot rolling can include intermediate rolling and finish rolling. The intermediate rolling is preferably performed using large-diameter rolls having a diameter of 100 mm or more. By performing the intermediate rolling using such large-diameter rolls, the strain can be easily introduced not only to the surface layer but also to the vicinity of the center of the sheet thickness, so that the crystal orientation can be easily controlled as described above. The finish rolling is preferably performed using small-diameter rolls.

In the case of a stainless steel which is harder than carbon steel, the cold rolling is generally performed with multi-stage small-diameter rolls such as Sendzimir mill. The Cold rolling with the large-diameter rolls can be performed, for example, using a tandem mill rolling machine used for cold rolling of carbon steel.

The cold-rolled material obtained by the cold rolling is preferably subjected to surface grinding after acid washing. Such conditions result in easier control of the crystal orientation of the stainless steel material to the above range.

The method of surface grinding is not particularly limited, and buffing, whetstone polishing, and the like can be used, for example. The thickness of surface ground is not particularly limited, but it may be 0.001 to 0.050 mm.

It should be noted that known steps such as annealing and acid washing may be carried out after the hot rolling.

On the surface of the stainless steel material according to the embodiment of the present invention produced as described above, a passive film is formed in an oxygen-containing atmosphere (for example, an air atmosphere).

The passive film has excellent conductivity at a temperature of 600°C or less. The stainless steel material also has excellent thermal shock resistance, and it is, therefore, suitable for use in solid oxide fuel cells, particularly solid oxide fuel cells of low-temperature operation type, which is operated in a temperature range of 600°C or less (for example, 500 to 600°C).

When the stainless steel material according to the embodiment of the present invention is used for solid oxide fuel cells, the stainless steel member can be used for a member such as separators, current collectors (e.g., air electrode current collectors and fuel electrode current collectors), interconnectors, bus bars, end plates, and fuel electrode frames. Among them, the stainless steel material according to the embodiment of the present invention is preferably used for one or more members selected from the separators, the interconnectors, and the current collectors.

The member for solid oxide fuel cells according to an embodiment of the present invention includes the stainless steel material according to the embodiment of the present invention. The solid oxide fuel cell according to the embodiment of the present invention also includes the member for solid oxide fuel cells according to the embodiment of the present invention.

The member for solid oxide fuel cells includes, but not particularly limited to, the various members as described above.

The stainless steel material can be appropriately shaped according to the shapes of the various members. On the surface of the stainless steel material, a conductive coating layer may also be formed. The conductive coating layer is not particularly limited, but it may be formed of materials known in the art. For example, the conductive coating layer can be formed using highly conductive metals such as Ag and Co. The conductive coating layer may also be a single metal layer or an alloy layer, and may have a single layer structure or a laminated structure.

In addition, the stainless steel material may be subjected to modification (roughening) of the passive film from the viewpoint of enhancing adhesion to the conductive coating layer. For example, the modification (roughening) of the passive film can be performed by a known method such as immersing of the stainless steel material in a nitric-hydrofluoric acid solution.

EXAMPLES

While the present invention will be described below in detail with reference to Examples, the present invention is not construed as being limited thereto.

A slab having each composition as shown in Table 1 was smelted, heated at 1200°C, and then hot-rolled into a hot-rolled sheet having a thickness of 3.0 mm. The hot-rolled sheet was then annealed and washed with an acid, and then cold-rolled. In the cold rolling, the hot-rolled sheet was subjected to intermediate rolling at 40 to 60% using large-diameter rolls having a diameter of 100 mm, and then subjected to intermediate annealing and acid washing, and then subjected to finish rolling with small-diameter rolls to form a cold-rolled sheet having 0.1 to 0.5 mm. The cold-rolled sheet was then subjected to finish annealing and acid washing, and the surface was ground by 0.005 to 0.01 mm with a grindstone to obtain a stainless steel material. Further, in the cold rolling, a stainless steel material was also produced by performing the intermediate rolling with the same small-diameter rolls as those of the finish rolling in the cold rolling. It should be noted that the roll diameters used in the intermediate rolling is shown in Table 2.

[Table 1]

| Steel Nos | Composition (% by mass) | | | | | | | | | | | | | | High Purity Index |
|---|---|---|---|---|---|---|---|---|---|---|---|---|---|---|---|
| | C | Si | Mn | P | S | Cr | Mo | N | Al | Nb | Ti | Ni | Cu | Others | |
| A1 | 0005 | 004 | 012 | 0011 | 0.0010 | 164 | 0.01 | 0009 | 0.03 | 000 | 017 | 000 | 0.00 | B:0.0008 | 0 58 |
| A2 | 0.011 | 0.15 | 005 | 0.025 | 0.0002 | 17.6 | 0.10 | 0011 | 0.04 | 0.16 | 007 | 0.18 | 021 | Sn:0.2 Ga:0.01 | 0.88 |
| A3 | 0.004 | 095 | 025 | 0.022 | 0.0007 | 134 | 005 | 0007 | 0.01 | 0.39 | 0.00 | 0.01 | 021 | -- | 1.08 |
| A4 | 0.013 | 0.45 | 0.07 | 0.026 | 0.0022 | 19.4 | 0 10 | 0.023 | 002 | 0.37 | 002 | 0 25 | 0.45 | V:0.2 W:0.1 | 1.38 |
| A5 | 0.009 | 0.13 | 0.13 | 0042 | 0.0005 | 21.8 | 1.05 | 0015 | 007 | 0.28 | 0.10 | 0.09 | 0.08 | Ca:0.0025 Co:0.1 | 1.34 |
| A6 | 0.002 | 007 | 0.06 | 0012 | 0 0001 | 14 4 | 002 | 0.005 | 0.06 | 0.10 | 003 | 0.01 | 0.02 | Sn:0.1 B:0.0003 | 043 |
| A7 | 0028 | 035 | 0 93 | 0.022 | 00002 | 16.2 | 0.10 | 0008 | 0.23 | 020 | 020 | 001 | 0.01 | Mg:0.001 Zr:0.01 | 1.34 |
| A8 | 0004 | 0.15 | 0.18 | 0028 | 00008 | 185 | 065 | 0013 | 0.05 | 0.18 | 0.13 | 0 85 | 0.03 | Y+La:0.02 Hf 0 02 | 1.03 |
| A9 | 0.003 | 0.18 | 0 11 | 0.018 | 0.0002 | 19.3 | 105 | 0016 | 006 | 0 25 | 007 | 0 10 | 005 | -- | 0.98 |
| 61 | 0031 | 021 | 011 | 0.023 | 0.0005 | 162 | 0.01 | 0011 | 0.05 | 0.01 | 022 | 0.01 | 001 | -- | 1.07 |
| B2 | 0.018 | 1 10 | 0.22 | 0023 | 0.0005 | 16.4 | 001 | 0012 | 0.06 | 001 | 0.23 | 001 | 001 | B:0.0007 | 097 |
| B3 | 0007 | 018 | 025 | 0.023 | 00005 | 12.8 | 0.01 | 0.008 | 006 | 0.01 | 024 | 001 | 001 | -- | 084 |
| B4 | 0.021 | 0.23 | 026 | 0.023 | 0.0023 | 163 | 0.01 | 0.022 | 0.10 | 012 | 0.31 | 0.01 | 0.01 | -- | 1.51 |
| B5 | 0015 | 018 | 0.15 | 0.022 | 00003 | 22.0 | 1.05 | 0.013 | 0.11 | 022 | 0.18 | 0.10 | 0.15 | V:0.1 W:0.2 | 126 |
| 66 | 0.007 | 017 | 0.24 | 0023 | 0.0006 | 19.2 | 1.52 | 0015 | 008 | 0.18 | 022 | 0.01 | 0.01 | -- | 121 |
| 67 | 0.008 | 018 | 015 | 0.022 | 0.0003 | 17.4 | 105 | 0013 | 0.31 | 0.22 | 002 | 0.10 | 002 | Mg:0.002 Zr:0.01 | 0.87 |

(Remarks) Underlines indicate that they are out of the scope of the present invention. The balance is Fe and impurities.

The crystal orientations {110}, {211} and {200} at the depth position of 10 μm from the surface of each of the resulting stainless steel materials were measured, and the crystal orientation ratio ({200} / [{110}+{211}]) were determined. Also, the ratio of the crystal orientation {111} ± 15° at the central position in the thickness direction was measured. The crystal orientations were measured under the conditions as described above. The results are shown in Table 2.

Further, each of the resulting stainless steel materials was evaluated for electrical conductivity and thermal shock resistance. The evaluation method is as follows.

(1) Electrical Conductivity

Surface modification was performed by immersing each stainless steel material in an aqueous solution containing 5.0% by mass of hydrofluoric acid and 15% by mass of nitric acid (at a liquid temperature of 60°C) for 1 to 5 minutes, followed by a coating treatment to form a conductive coating layer. In the coating treatment, the stainless steel material was adjusted such that a Co plating was formed to have a thickness of 2 to 5 μm on the surface of the surface-modified stainless steel material.

Two of the stainless steel materials each having a conductive coating layer formed (each of the stainless steel materials is, hereinafter, referred to as a "stainless steel material with a conductive coating layer") were exposed to heat at 600°C for 1000 hours in a dry air atmosphere adjusted to a dew point of -40°C (an $H_2O$ concentration of about 0.013%). Subsequently, the two stainless steel materials with a conductive coating layer were used to prepare a sample for measurement as shown in FIG. 1, and the measurement was performed by the four-probe method using a potentiostat. More particularly, it was carried out as follows:
First, a conductive paste (Ag paste) was applied in a square shape (10 mm on a side and 10 μm in thickness) to the center of each of the two stainless steel materials 10 with a conductive coating layer and dried to form conductive portions 20. Subsequently, the conductive portions 20 of the two stainless steel materials 10 with a conductive coating layer were stacked and arranged in a cross shape, and they were then sandwiched between alumina plates, and a weight (200 g) was placed thereon, and the conductive portions 20 were baked in an electric furnace (at 850°C for 30 minutes). The surfaces were shaved using the minitor until the metal matrix was exposed, and wiring attachment portions 30 as shown in FIG. 1 were formed. Subsequently, silver wires 40 (having a diameter of 0.3 mm) were wound around the wiring attachment portions 30, and a conductive paste was applied thereto and dried at 150°C for 30 minutes to obtain a sample for measurement. The sample for measurement was then placed in a high-temperature electrochemical measurement device, and a voltage-current curve was obtained by the four-probe method using a potentiostat. In the measurement, the measurement temperature was 600°C and the voltage was swept up to 10 mV. Also, a resistance value was calculated from a slope of the voltage-current curve. In the evaluation, a case where the resistance value was 20 mΩ·$cm^2$ or less was determined to be A (the conductivity at the high temperature was particularly improved), and a case where the resistance value was more than 20 mΩ·$cm^2$ and 50 mΩ·$cm^2$ or less was determined to be B (the conductivity at the high temperature was improved), and a case where the resistance value was more than 50 mΩ·$cm^2$ was determined to be C (the conductivity at the high temperature was insufficient).

(2) Thermal Shock Resistance

The thermal shock resistance was evaluated by repeating a heating/cooling cycle for the stainless steel material with a conductive coating layer. More particularly, a sample having 10 mm x 25 mm was prepared by cutting the Coplated stainless steel material with a conductive coating layer as described above. An intermittent heating test was then carried out in 100 cycles; one cycle consisted of placing the sample in a movable muffle furnace heated to 600°C, maintaining the sample in the air atmosphere for 25 minutes (inside the muffle furnace), releasing the air atmosphere and cooling the sample for 5 minutes (moving the muffle furnace). In the intermittent heating test, a case where the Co plating was not peeled off was determined to be A (higher thermal shock resistance), and a case where the Co plating was peeled off was determined to be C (lower thermal shock resistance).

Table 2 shows the above evaluation results.

[Table 2]

| Test Nos. | Steel Nos. | intermediate Rolling Roll Diameter | Crystal Orientation Ratio ({200}/[{110}+{211}]) | Crystal Orientation {111} ±15° (%) | Electrical Conductivity | Thermal Shock Resistance | Classification |
|---|---|---|---|---|---|---|---|
| 1 | A1 | Small Diameter | 0.21 | 65 | B | A | Example |

(continued)

| Test Nos. | Steel Nos. | intermediate Rolling Roll Diameter | Crystal Orientation Ratio ({200}/[{110}+ {211}]) | Crystal Orientation {111} ±15° (%) | Electrical Conductivity | Thermal Shock Resistance | Classification |
|---|---|---|---|---|---|---|---|
| 2 | A1 | Large Diameter | 0.12 | 90 | A | A | Example |
| 3 | A2 | Small Diameter | 0.24 | 63 | B | A | Example |
| 4 | A2 | Large Diameter | 0.14 | 85 | A | A | Example |
| 5 | A3 | Large Diameter | 0.22 | 70 | B | A | Example |
| 6 | A4 | Large Diameter | 027 | 62 | B | A | Example |
| 7 | A5 | Large Diameter | 0.25 | 63 | B | A | Example |
| 8 | A6 | Small Diameter | 0 19 | 70 | B | A | Example |
| 9 | A6 | Large Diameter | 008 | 95 | A | A | Example |
| 10 | A7 | Large Diameter | 0.25 | 70 | B | A | Example |
| 11 | A8 | Large Diameter | 0.23 | 75 | B | A | Example |
| 12 | A9 | Small Diameter | 0.22 | 65 | B | A | Example |
| 13 | A9 | Large Diameter | 0.15 | 85 | A | A | Example |
| 14 | B1 | Large Diameter | 0.30 | 55 | C | C | Comp. |
| 15 | B2 | Large Diameter | 0.35 | 60 | C | A | Comp. |
| 16 | B3 | Large Diameter | 0.25 | 80 | C | A | Comp. |
| 17 | B4 | Large Diameter | 0.30 | 60 | C | C | Comp. |
| 18 | B5 | Large Diameter | 0.25 | 70 | B | C | Comp |
| 19 | B6 | Large Diameter | 0.25 | 70 | B | C | Comp. |
| 20 | B7 | Large Diameter | 0.22 | 70 | B | C | Comp. |
| (Remarks) Underlines indicate that they are out of the scope of the present invention. | | | | | | | |

As shown in Table 2, each of the stainless steel materials of Test Nos. 1 to 13 (Examples) had a predetermined composition, and thus has excellent electrical conductivity and thermal shock resistance. In particular, each of the stainless steel materials of Test Nos. 2, 4, 9 and 13 had a preferred composition and subjected to intermediate rolling (cold rolling) with large-diameter rolls, so that the crystal orientation had the preferable range, and the electrical conductivity was very good.

On the other hand, each of the stainless steel materials of Test Nos. 14 to 20 (Comparative Examples) had a composition or a high purity index which were out of the predetermined ranges, so that one or both of the electrical conductivity and the thermal shock resistance was insufficient. In particular, each of Test Nos. 16 and 18 to 20 had the appropriate crystal orientation by performing the intermediate rolling (cold rolling) with large-diameter rolls, but the amount of Cr, Mo, or Al was out of the predetermined range. Therefore, Test No. 16 had the insufficient electrical conductivity, and each of Test No. Nos. 18 to 20 had the insufficient thermal shock resistance.

As can be seen from the above results, according to the present invention, it is possible to provide a stainless steel material for solid oxide fuel cells, which has excellent conductivity at a temperature of 600°C or less and excellent thermal shock resistance, and a method for producing the same. According to the present invention, it is also possible to provide a member for solid oxide fuel cells and a solid oxide fuel cell, which comprise the stainless steel material for solid oxide fuel cells having such properties.

Description of Reference Numerals

10 stainless steel material with conductive coating layer
20 conductive portion
30 wiring attachment portion
40 silver wire

**Claims**

1. A stainless steel material for solid oxide fuel cells, the stainless steel material comprising: on a mass basis, 0.030% or less of C; 1.00% or less of Si; 1.00% or less of Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti; 1.00% or less of Ni; and 1.00% or less of Cu, a high purity index represented by the following equation (1) being less than 1.50%, and the balance being Fe and impurities:

$$\text{high purity index} = 10(C + N) + 15S + 8P + 2(Ti + Nb) \qquad (1)$$

wherein each of the symbols of the elements represents a content of each of the elements.

2. The stainless steel material for solid oxide fuel cells according to claim 1, wherein the stainless steel material further comprises one or more selected from: 0.0050% or less of B; 0.5% or less of Sn; 0.5% or less of V; 0.5% or less of W; 0.010% or less of Ca; 0.010% or less of Mg; 0.50% or less of Zr; 0.5% or less of Co; 0.01% or less of Ga; 0.10% or less of Hf, and 0.10% or less of REM, on a mass basis.

3. The stainless steel material for solid oxide fuel cells according to claim 1 or 2, wherein a crystal orientation ratio ({200} / [{110} + {211}]) of a crystal orientation {200} to the sum of crystal orientations {110} and {211} is less than 0.30 at a depth position of 10 μm from the surface.

4. The stainless steel material for solid oxide fuel cells according to any one of claims 1 to 3, wherein a ratio of a crystal orientation {111} ± 15° is more than 60% at a position at a center in a thickness direction.

5. The stainless steel material for solid oxide fuel cells according to any one of claims 1 to 4, wherein the stainless steel material is used for one or more members selected from separators, interconnectors and current collectors.

6. A method for producing a stainless steel material for solid oxide fuel cells, the method comprising subjecting a slab to hot rolling, followed by cold rolling, the slab comprising: on a mass basis, 0.030% or less of C; 1.00% or less of Si; 1.00% or less or Mn; 0.050% or less of P; 0.0030% or less of S; 13.0% or more and less than 22.0% of Cr; 1.50% or less of Mo; 0.030% or less of N; 0.30% or less of Al; 0.40% or less of Nb; 0.40% or less of Ti; 1.00% or less of Ni; and 1.00% or less of Cu, a high purity index represented by the following equation (1) being less than 1.50%, and the balance being Fe and impurities:

$$\text{high purity index} = 10(C + N) + 15S + 8P + 2(Ti + Nb) \qquad (1)$$

wherein each of the symbols of the elements represents a content of each of the elements.

7. The method for producing a stainless steel material for solid oxide fuel cells according to claim 6, wherein the slab further comprises one or more selected from: 0.0050% or less of B; 0.5% or less of Sn; 0.5% or less of V; 0.5% or less of W; 0.010% or less of Ca; 0.010% or less of Mg; 0.50% or less of Zr; 0.5% or less of Co; 0.01% or less of Ga; 0.10% or less of Hf, and 0.10% or less of REM, on a mass basis.

8. The method for producing a stainless steel material for solid oxide fuel cells according to claim 6 or 7, wherein the cold rolling comprises performing intermediate rolling using large-diameter rolls having a diameter of 100 mm or more.

9. The method for producing a stainless steel material for solid oxide fuel cells according to any one of claims 6 to 8, wherein a cold-rolled material obtained by the cold rolling is subjected to acid washing, followed by surface grinding.

10. A member for solid oxide fuel cells, the member comprising the stainless steel material for solid oxide fuel cells according to any one of claims 1 to 5.

11. A solid oxide fuel cell comprising the member for solid oxide fuel cells according to claim 10.

**FIG. 1**

## INTERNATIONAL SEARCH REPORT

| International application No. |
|---|
| **PCT/JP2021/045168** |

**A. CLASSIFICATION OF SUBJECT MATTER**

*C22C 38/00*(2006.01)i; *C22C 38/50*(2006.01)i; *C22C 38/54*(2006.01)i; *C23G 1/08*(2006.01)i; *H01M 8/021*(2016.01)i; *H01M 8/12*(2016.01)i

FI: C22C38/00 302Z; C22C38/50; C22C38/54; C23G1/08; H01M8/12 101; H01M8/021

According to International Patent Classification (IPC) or to both national classification and IPC

**B. FIELDS SEARCHED**

Minimum documentation searched (classification system followed by classification symbols)

C22C38/00-38/60; C23G1/08; H01M8/021; H01M8/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/010680 A1 (NIPPON STEEL & SUMIKIN STAINLESS STEEL CORP.) 16 January 2014 (2014-01-16) claims, paragraph [0041], table 1 | 1-2, 5-7, 10-11 |
| Y | | 9 |
| A | | 3-4, 8 |
| X | WO 2018/008658 A1 (NIPPON STEEL & SUMIKIN STAINLESS STEEL CORP.) 11 January 2018 (2018-01-11) claims, paragraph [0085], tables 1, 3 | 1-2, 5-7, 10-11 |
| Y | | 9 |
| A | | 3-4, 8 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2021/045168** |

### C. DOCUMENTS CONSIDERED TO BE RELEVANT

| Category* | Citation of document, with indication, where appropriate, of the relevant passages | Relevant to claim No. |
|---|---|---|
| X | JP 2017-125248 A (NIPPON STEEL & SUMIKIN STAINLESS STEEL CORP.) 20 July 2017 (2017-07-20)<br>    claims, paragraph [0038], table 1 | 1-2, 5-7, 10-11 |
| Y | | 9 |
| A | | 3-4, 8 |
| Y | JP 2005-226083 A (NISSHIN STEEL CO., LTD.) 25 August 2005 (2005-08-25)<br>    claims, paragraphs [0013], [0024] | 9 |
| A | CN 101195894 A (JILIN INSTITUTE OF CHEMICAL TECHNOLOGY) 11 June 2008 (2008-06-11)<br>    claims, table1 | 1-11 |
| A | CN 111876661 A (NINGBO BAOXIN STAINLESS STEEL CO., LTD.) 03 November 2020 (2020-11-03)<br>    claims, table 1 | 1-11 |

Form PCT/ISA/210 (second sheet) (January 2015)

INTERNATIONAL SEARCH REPORT
Information on patent family members

International application No.

**PCT/JP2021/045168**

| Patent document cited in search report | | | Publication date (day/month/year) | Patent family member(s) | | | Publication date (day/month/year) |
|---|---|---|---|---|---|---|---|
| WO | 2014/010680 | A1 | 16 January 2014 | EP | 2871251 | A1 | |
| | | | | claims, paragraph [0046], table 1 | | | |
| | | | | CN | 104379790 | A | |
| | | | | JP | 2014-31572 | A | |
| WO | 2018/008658 | A1 | 11 January 2018 | EP | 3480334 | A1 | |
| | | | | claims, paragraph [0073], tables 1, 3 | | | |
| | | | | CN | 109196133 | A | |
| JP | 2017-125248 | A | 20 July 2017 | (Family: none) | | | |
| JP | 2005-226083 | A | 25 August 2005 | (Family: none) | | | |
| CN | 101195894 | A | 11 June 2008 | (Family: none) | | | |
| CN | 111876661 | A | 03 November 2020 | (Family: none) | | | |

Form PCT/ISA/210 (patent family annex) (January 2015)

**REFERENCES CITED IN THE DESCRIPTION**

**Patent documents cited in the description**

- JP 2020053388 A

- JP 6696992 B